Europäisches Patentamt

European Patent Office

Office européen des brevets

(11) Veröffentlichungsnummer: **0 052 782**
**B1**

# (12) EUROPÄISCHE PATENTSCHRIFT

(45) Veröffentlichungstag der Patentschrift: **28.05.86**

(21) Anmeldenummer: **81108957.2**

(22) Anmeldetag: **27.10.81**

(51) Int. Cl.⁴: **B 60 G 15/00,** B 60 G 15/12,
B 60 G 17/04, B 60 G 11/30,
F 16 F 13/00

(54) **Federungssystem für Fahrzeuge.**

(30) Priorität: **25.11.80 DE 3044287**

(43) Veröffentlichungstag der Anmeldung:
**02.06.82 Patentblatt 82/22**

(45) Bekanntmachung des Hinweises auf die
Patenterteilung:
**28.05.86 Patentblatt 86/22**

(84) Benannte Vertragsstaaten:
**DE FR GB IT SE**

(56) Entgegenhaltungen:
**DE-A-1 555 226**
**DE-A-1 580 236**
**DE-A-1 655 029**
**DE-A-1 655 094**
**DE-A-2 017 098**
**DE-A-2 020 292**
**DE-A-2 243 585**
**DE-A-2 315 237**
**DE-A-2 655 705**
**DE-A-2 736 026**
**DE-A-2 915 133**

(73) Patentinhaber: **BAYERISCHE MOTOREN WERKE
Aktiengesellschaft
Postfach 40 02 40 Petuelring 130
D-8000 München 40 (DE)**

(72) Erfinder: **Müller, Rudi, Dipl.-Ing.
Mühlstrasse 12
D-8081 Egenhofen (DE)**
Erfinder: **Pauly, Axel, Dr. Ing.
Eschenkamp 21 Tankumsee
D-3172 Isenbüttel (DE)**

(74) Vertreter: **Dexheimer, Rolf
Bayerische Motoren Werke Aktiengesellschaft
Postfach 40 02 40 Petuelring 130 - AJ-21
D-8000 München 40 (DE)**

(56) Entgegenhaltungen:
**DE-B-1 291 641**
**DE-B-1 480 098**
**FR-A-2 436 030**
**GB-A-1 113 801**
**US-A-2 620 182**

Courier Press, Leamington Spa, England.

EP 0 052 782 B1

## Beschreibung

Die Erfindung bezieht sich auf ein Federungssystem für Fahrzeuge, mit einem durch die Relativbewegungen zwischen Rad und Fahrzeugaufbau betätigbaren Verdränger, dessen Arbeitsraum unter Zwischenschaltung wenigstens einer Drossel mit mindestens zwei durch ein Strömungsmittel beaufschlagbaren Federn in Verbindung steht.

Bekannte derartige Federungen (DE—B—14 30 836 oder DE—A—16 55 029) weisen jeweils zwei mit einem Verdränger verbundene hydropneumatische Federn auf. Mit diesen Systemen ist das Problem einer mit der Beladung des Fahrzeugs möglichst zunehmenden Aufbaudämpfung noch nicht befriedigend gelöst, wenn dabei gleichzeitig die Raddämpfung möglichst gleich bleiben soll.

Bei Federungssystemen der bereits genannten Art mit beispielsweise zwei hydropneumatischen Federn pro Fahrzeugrad ist wegen der annäherungsweise gültigen Formel $p \cdot v = const.$ jeder statischen Druckänderung $\Delta p_{stat}$ in jeder Feder eine anteilig gleiche relative Volumenänderung zugeordnet. Das bedeutet aber, daß das Verhältnis der vom Verdränger zu den zwei Federn verdrängten Teil-Volumenströme immer gleich ist:

$$p_1 \cdot v_{1l} = p_b \cdot v_{1b};$$

$$p_1 \cdot v_{2l} = p_b \cdot v_{2b};$$

$$\frac{p_1}{p_b} = \frac{v_{1b}}{v_{1l}} = \frac{v_{2b}}{v_{2l}} \quad .$$

$$\frac{v_{1b}}{v_{2b}} = \frac{v_{2l}}{v_{2l}}$$

Hierbei stehen die Indizes "l" für leer, "b" für beladen und "1" für das Gasvolumen der ersten Feder und "2" für das Gasvolumen der zweiten Feder. Aus den erläuterten Zusammenhängen folgt, daß Drosseln, die einer oder beiden Federn vorgeschaltet sind, auch immer im gleichen Anteil zur Gesamtdämpfung beitragen. Eine belastungsabhängige Änderung der Dämpfung ist daher nicht erreichbar.

Mit Federungs- und Dämpfungssystemen für Kraftfahrzeuge der eingangs genannten Art besteht bisher, ebenso wie bei Verwendung einer mechanischen Federung zusammen mit herkömmlichen Stoßdämpfern, die Notwendigkeit, in der Bedämpfung der Federung Kompromisse zu schließen. Ist die Dämpfung auf eine mittlere Beladung des Fahrzeugs abgestimmt, so wird sie bei geringer Beladung als zu hart und bei großer Zuladung als zu weich empfunden werden.

Legt man bei der Festlegung der Dämpferkennung auch noch ein verstärktes Gewicht auf die bei etwa 12 Hz liegende Radeigenfrequenz, so besteht die Gefahr, daß im Bereich der Aufbaueigenfrequenz von etwa 1,2 Hz überhaupt keine ausreichende Dämpfung mehr vorhanden ist. Dies führt zum Beispiel dazu, daß neben speziellen Komfortabstimmungen auch noch Sportabstimmungen angeboten werden.

Es sind schon viele Versuche unternommen worden, die Dämpfung etwa lastabhängig, oder wegabhängig, oder auch frequenzabhängig zu verändern.

Bei wegabhängigen Dämpfungsänderungen kann über einen Stellkolben zum Beispiel eine größere Anzahl von Drossel-öffnungen freigegeben oder überdeckt werden. Durch die DE—A—26 55 705 ist eine Möglichkeit aufgezeigt worden, ab einem bestimmten Ausfeder- oder Einfederweg zusätzliche Hilfsdämpfungskolben wirksam werden zu lassen. Bei Austin-Fahrzeugen ist eine wegabhängige Änderung der Verdrängerfläche vorgesehen, während weiterhin auch schon eine Änderung der Verdrängergeschwindigkeit durch Änderung des Übersetzungsverhältnisses zwischen Radhub und Dämpferhub vorgeschlagen wurde. Den wegabhängigen Dämpfungen haftet der Nachteil an, daß bei niveaugeregelten Fahrzeugen die Dämpfkraft nicht mit der Belastung ansteigt, da der Fahrzeughöhenstand konstant bleibt.

Die Dämpfung bei hypdropneumatischen Federunge in Abhängigkeit vom Gasfederdruck zu verändern, ist ebenfalls bereits bekannt (DE—A—15 55 382 oder 15 55 383), doch benötigen diese Lösungen durchwegs aufwendige und wegen der Verschmutzungsgefahr und des Verschleißes störanfällige Steuereinrichtungen, wobei zum Vermeiden von unkontrollierten Schaltstößen das Stellglied seinerseits wiederum bedämpft werden muß, was dann wieder zu einer vergrößerten Temperaturabhängigkeit führt.

Schließlich sind auch schon frequenzabhängige Änderungen der Drosselquerschnitte vorgeschlagen worden, wie etwa aus der DE—B—10 45 256 oder der DE—A—15 55 491 hervorgeht. Die dabei verwendeten frequenzempfindlichen Trägheitsmassen bewirken noch verstärkt den bereits angedeuteten Nachteil einer großen Temperaturabhängigkeit, da wegen der schnellen Druckstöße eine besonders hohe Eigendämpfung der Stellglieder erforderlich ist.

Es ist ferner noch aus der DE—C—16 75 634 oder DE—A—24 06 835 ein Luftfeder- und Dämpfer-System bekannt, das last- und frequenzabhängig arbeitet, doch sind dabei vergleichsweise sehr hohe Luftmengen erforderlich, um überhaupte eine ausreichende Dämpfungsarbeit erzielen zu können. Schon bei relativ geringen Verdrängergeschwindigkeiten fallen die Dämpferkräfte beträchtlich ab und die Gesamtfederrate wird deutlich erhöht, was einen schnellen Anstieg der Aufbaufrequenz zur Folge hat.

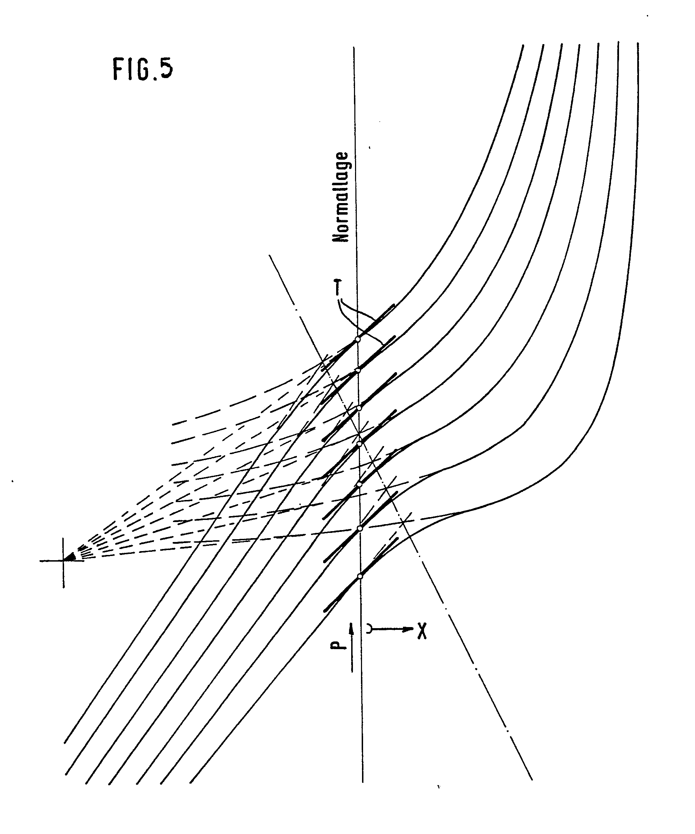

Durch die DE—A—20 17 098 ist ein hydropneumatisches Federungssystem mit automatischer Leckflüssigkeitsnachregelung bekannt, bei dem der Ölraum des Verdrängers mit zwei Gasräumen—dem eigentlichen Gasfederraum und dem Verstellgasraum eines Verstellgliedes—in Verbindung steht. Dem Verstellglied ist dabei auch eine Drossel vorgeschaltet (Fig. 5), doch ist sie der progressiveren Feder der beiden Federn vorgeschaltet, wenn man (theoretisch) unterstellt, daß das Verstellglied überhaupt wesentlich Federarbeit übernimmt, was nach der Beschreibung jedoch nicht der Fall ist. Die erwähnte Drossel würde jedoch bei zunehmender Belastung des Systems immer weniger wirksam, was unerwünscht ist.

Der Erfindung liegt die Aufgabe zugrunde, ein Federungssystem für Fahrzeuge der eingangs genannten Art zu schaffen, mit dem auf besonders einfache Weise bei zunehmender Belastung des Systems auch die Dämpfung ansteigt. Dabei soll auch die Möglichkeit eröffnet werden, durch weitere Ausgestaltungen die Dämpfung frequenzabhängig zu verändern.

Diese Aufgabe wird bei einer Federung der vorausgesetzten Gattung dadurch gelöst, daß die Federn unterschiedliche belastungsabhängige Federratenänderungen haben, wodurch jeweils abhängig vom stätischen Strömungsmitteldruck eine unterschiedliche Aufteilung der zu den Federn verdrängten Volumenanteile erfolgt, und daß ferner zumindest eine lastabhängig wirksame Drossel der weniger progressiven Feder vorgeschaltet ist.

So kann zum Beispiel bei niedriger Belastung, also niedrigem Strömungsmitteldruck, die erste Feder vergleichsweise weicher sein als die zweite, weshalb bei dieser Belastung der Anteil des zu dieser weicheren Feder vordrängten Strömungsmittels größer ist als der Anteil des zu der zweiten Feder verdrängten Strömungsmittels. Die der zweiten Feder vorgeschaltete Drossel wird daher—wegen des verminderten durch sie strömenden Volumenanteils—nur weniger Dämpfkraft erzeugen. Hat die genannte erste Feder (zum Beispiel eine hydropneumatische Feder mit konstanter Gasmasse) bei höherer Belastung schon eine wesentlich höhere Federrate als etwa die erwähnte zweite Feder, so strömt bei dieser Beladung zu den nun "weicheren" zweiten Feder ein wesentlich höherer Anteil des verdrängten Volumens, weshalb dann die der zweiten Feder vorgeschaltete Drossel bedeutend mehr Dämpfkraft erzeugt. Die Drossel übt daher bei höherer Beladung des Fahrzeugs in der mit der Erfindung angestrebten Weise eine höhere Dämpfkraft aus als bei bei geringer Beladung, wobei die Dämpfkraftübergänge stufenlos erfolgen.

Der vorstehend umschriebene Grundgedanke ist in einer größeren Anzahl von Ausgestaltungen und besonders vorteilhaften Weiterbildungen realisierbar, die Gegenstand von Unteranprüchen sind, und im folgenden anhand der Zeichnung näher erläutert werden. Es zeigen:

Fig. 1 eine Schemadarstellung einer ersten Ausführungsform der neuen Federung;

Fig. 1a und b typisch Federkennlinien der in Fig. 1 dargestellten beiden Federn;

Fig. 2 ein weiteres Ausführungsbeispiel der neuen Federung;

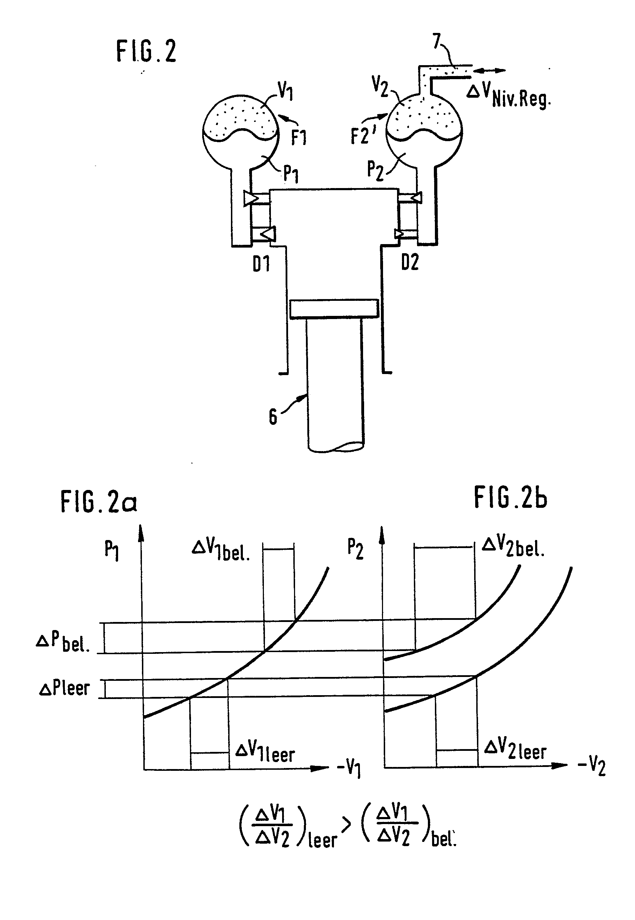

Fig. 2 a und b Federkennlinien zu den in Fig. 2 dargestellten Federn;

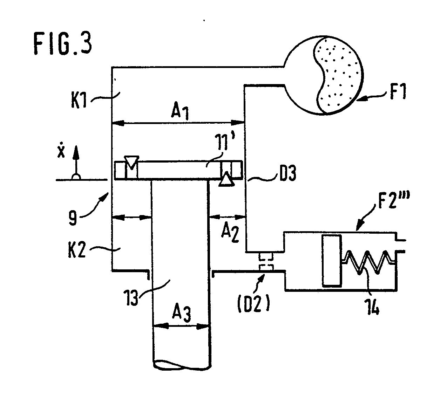

Fig. 3 eine weitere Ausführungsform der erfindungsgemäßen Federung;

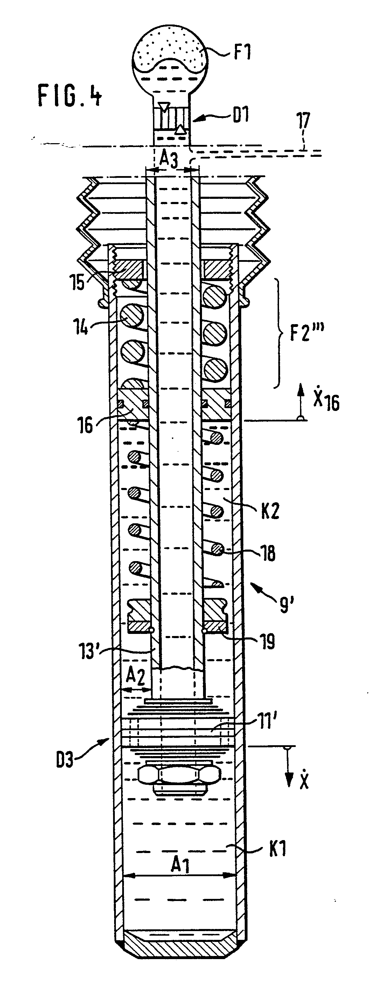

Fig. 4 eine technische Ausgestaltung des in Fig. 3 dargestellten Prinzips;

Fig. 5 Kennlinien der Federung nach Fig. 4 bei Verwendung dieser Federung mit einer Niveauregulierung;

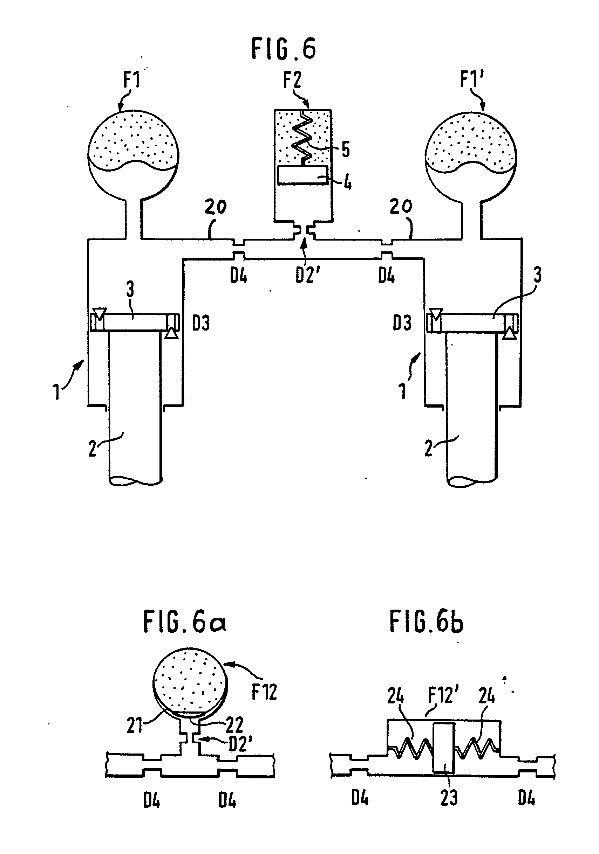

Fig. 6 eine Ausführungsform der neuen Federung für die Räder oder Radpaare einer Fahrzeugachse und

Fig. 6 a und b weitere Ausgestaltungen zu der in Fig. 6 schematisch dargestellten Federung.

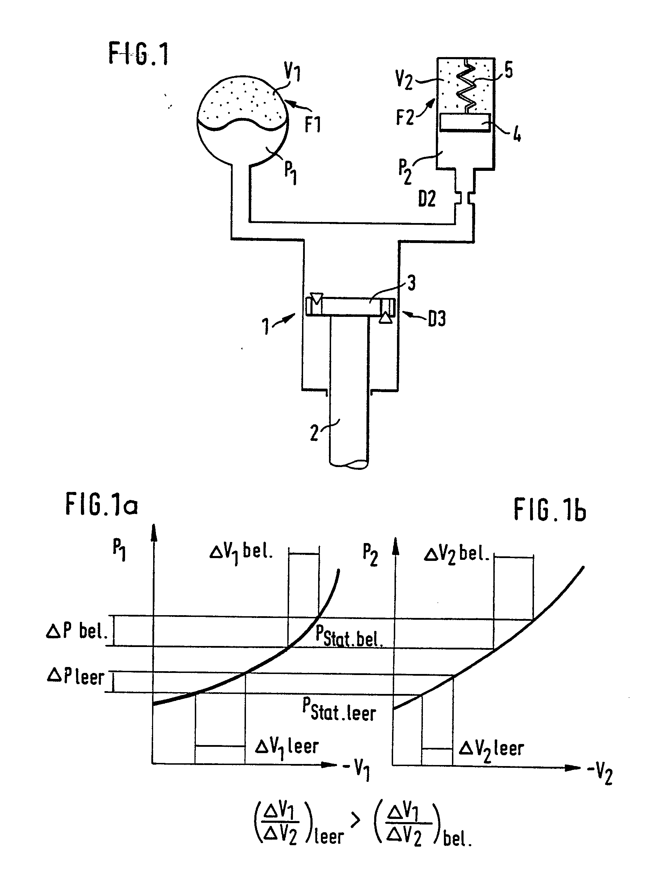

Mit der in Fig. 1 dargestellten Federung ist eine vornehmlich lastabhängig veränderliche Dämpfung erreichbar. Die Federung umfaßt einen Verdränger 1 in Dämpferbauart, bei dem die Kolbenstange 2 als der eigentliche Verdränger dient. Im Kolben 3 ist die Drossel D 3 für die Grunddämpfung vorgesehen. Die Drossel D 3 kann aus federbelasteten Ventilen für die Raddämpfung in Verbindung mit einer Konstantöffnung bestehen, die so groß bemessen ist, daß eine ausreichende Aufbaudämpfung bei leerem Fahrzeug sichergestellt ist.

Die Federn F1 und F2 sind räumlich nebeneinander angeordnet, und in der Federwirkung in Serie geschaltet;

das heißt, daß das von der Kolbenstange 2 beim Einfedern verdrängte Ölvolumen in zwei Volumenströme aufgeteilt wird, von denen der eine der Feder F 1 und der andere der Feder F 2 zugeleitet wird. Bei dem dargestellten Ausführungsbeispiel ist der Feder F 2 eine Drossel D 2 vorgeschaltet, die die zusätzliche Aufbaudämpfung bei höherer Last übernimmt. Die beiden Federn F 1 und F 2 sind hydropneumatische Federn, wobei die Feder F 1 ein Membranspeicher und die Feder F 2 ein Kolbenspeicher ist. Beide Federn haben konstante Gasmassen. Der Kolben 4 der Feder F 2 ist mit einer mechanischen Zusatz-Feder 5 verbunden, die als Druckfeder im Gasraum des Kolbenspeichers angeordnet ist. Mit der Zusatz-Feder 5 wird die Kennlinie der Feder F 2 "linearisiert", wie ein Vergleich der Fig. 1 a und 1 b zeigen soll.

In Fig. 1 a ist der typische Kennlinienverlauf einer Gasfeder aufgetragen, die bei geringer Belastung ($p_{stat.\ leer}$) noch einen vergleichsweise flachen Verlauf hat, der aber bei zunehmender Belastung ($p_{stat.\ bel.}$) schnell sehr steil wird.

Der in Fig. 1 b dargestellte Kannlinienverlauf der Feder F 2 ist bei geringer Beladung steiler als der entsprechende Verlauf der Feder F 1 (Fig. 1 a), wegen der "Linearisierung" ist er jedoch bei hoher Belastung im Vergleich zur Feder F 1 flacher. Bei geringem statischen Druck $p_{stat.\ leer}$ wird daher die Feder F 1 im Vergleich zur Feder F 2 den größeren Anteil des von der Kolbenstange verdrängten Volumenstroms aufnehmen ($\dot{V}\ 1 > \dot{V}\ 2$). Mit zunehmendem statischen Druck wächst der Anteil $\dot{V}\ 2$ an, da die Feder F 2 die weniger progressive Feder ist. Damit strömt auch durch die Drossel D 2 mehr Öl, wodurch eine kontinuierlich mit der Last zunehmende Aufbaudämpfung erreichbar ist. Bei höheren Verdrängergeschwindigkeiten wird dieser lastabhängige Dämpfungseffekt noch vom Durchflußwiderstand der Drossel D 2 und vom Trägheitswiderstand des Kolbens 4 der Feder F 2 verstärkt.

Bei der im Bild 2 schematisch dargestellten Ausführungsform einer Federung ist der Verdränger ein reiner Plunger-Kolben 6. Die Grunddämpfung übernehmen die den Federn F 1 und F 2' vorgeschalteten Drosseln D 1 und D 2. Von diesen beiden Drosseln hat die Drossel D 2 den größeren Durchflußwiderstand und bestimmt die zusätzliche Aufbaudämpfung.

Die für die Verwirklichung des Erfindungsgedankens unterschiedlichen Kennlinien der Federn F 1 und F 2' werden bei dieser Ausführungsform dadurch verwirklicht, daß die Feder F 1 als Feder mit konstantem Gasgewicht und die Feder F 2' als Feder mit variablem Gasgewicht ausgebildet ist. Zweckmäßig ist der Gasraum der Feder F 2' an eine Niveau-Regulierung angeschlossen, wie dies in Bild 2 durch die Leitung 7 angedeutet ist.

In Fig. 2 a ist der Kennlinienverlauf der Feder F 1 dargestellt während in Fig. 2 b die untere Kurve der Verlauf der Feder F 2' wäre, wenn sie nicht niveaugeregelt wäre. Die obere Kurve gibt die Kennlinie der Feder F 2' bei höherer Belastung an.

Aus den Fig. 2 a und 2 b geht hervor, daß die Feder F 1 mit zunehmender Belastung härter wird, während die Feder F 2' jedoch weicher wird. Die Niveau-Regulierung führt nämlich der Feder F 2' die Gasmenge zu, die durch die Kompression beider Federn F 1 und F 2' verschluckt wurde. Dadurch wird F 2' noch weicher als zum Beispiel eine einzelne Feder mit konstantem Gasvolumen (jedoch geregelter Gasmasse), der lediglich das von ihr selbst komprimierte Gasvolumen zugeführt wird.

Mit dem Ausführungsbeispiel nach Fig. 2 erhält man ebenfalls eine von der Belastung abhängige unterschiedliche Aufteilung der Volumenströme, wobei wegen der im Vergleich größeren Weichheit der Feder F 2' die Aufbaudämpfung über die Belastung noch schneller ansteigt als bei dem Ausführungsbeispiel nach Fig. 1, falls die übrigen Parameter konstant gehalten werden.

Fig. 3 zeigt eine Ausführungsform, bei der die Federn F 1 und F 2''' gegenüber einander stehen (wie mechanisch parallelgeschaltet). Die Feder F 1 ist dabei an die Kammer K 1 und die Feder F 2''' an die Kammer K 2 eines Zweikammer-Kolbenverdrängers angeschlossen.

Die in Fig. 3 dargestellte Federung hat eine Abhängigkeit der Dämpfkraft von der Frequenz, wobei noch eine Abhängigkeit von der Last dazukommt. Die Federung ist volltragend, weshalb der Querschnitt der Kolbenstange 13 relativ groß gewählt ist. Die hydropneumatische Feder F 1 ist an die kolbenstangenfreie Seite des Kolbenverdrängers 9 angeschlossen. Mit der Kammer K 2, also der Kolbenstangenseite des Verdrängers 9 ist ein Kolbenspeicher mit einer rein mechanischen Feder 14 verbunden. Die Feder F 2''' hat eine rein lineare Kennung, da die Kammer, in der die Feder 14 angeordnet ist, zur Atmosphäre entlüftet ist.

Bei geringen Verdrängergeschwindigkeiten, etwa im Bereich der Aufbaueigenfrequenz, ist die Wirkungsweise weitgehend wie bei der Federung nach Fig. 1: bei einem niedrigen statischen Druck wird das von der Kolbenstange 13 verdrängte Ölvolumen hauptsächlich zu der (bei diesem Druck) weicheren Feder F 1 gefördert ($\dot{V}$ 1>$\dot{V}$ 2). Mit zunehmendem statischen Druck nimmt die Federrate von F 1 zu, während die Federrate von F 2''' konstant bleibt, wodurch sich der Anteil $\dot{V}$ 1 gegenüber $\dot{V}$ 2 zunehmend verringert. Der Dämpfkraftverlauf läßt sich mit Hilfe folgender Grenzfälle erläutern:

$\dot{V}$ 1≫$\dot{V}$ 2: Bei einer sehr weichen Feder F 1 wird praktisch kein Öl zur Feder F 2''' gefördert. Deshalb strömt durch das Kolbenventil D 3 der gedrosselte Volumenstrom $\dot{V}_{D\,3\,leer}=A_2\dot{x}$. Hierbei ist x die Verdrängergeschwindigkeit und $A_2$ die Ringflänce zwischen Zylinder und Kolbenstange ($=A_1-A_3$).

$\dot{V}_1$≪$\dot{V}_2$: Bei einem hohen statischen Druck kann die Feder F 1 kaum noch dynamisch einfedern, deshalb erhöht sich der gedrosselte Volumenstrom auf $\dot{V}_{D\,3\,bel.}=A_1\dot{x}$. Die für das Dämpfungs-Volumen wirksame Verdrängerfläche hat sich also von der Ringfläche $A_2$ auf die Zylinderfläche $A_1$ vergrößert; damit steigt auch die Dämpfkraft im gleichen Verhältnis an. Falls erforderlich, kann die Dämpfkraftsteigerung noch durch eine der Feder F 2''' vorgeschaltete und somit bei höheren Drücken zunehmend wirksame Drossel D 2 verstärkt werden.

Bei höheren Verdrängergeschwindigkeiten, etwa im Bereich der Radfrequenzen, werden der statischen Druckerhöhung noch die dynamischen Druckunterschiede (infolge des größeren Druckabfalls an der Drossel D 3) überlagert. Das wirkt sich dahingehend aus, daß der Durchsatz durch die Drossel D 3 abnimmt und dafür die Federn F 1 und F 2''' stärker aktiviert werden. Im Grenfall (Durchflußwiderstand→∞) arbeitet der Kolben 11 als einer Verdränger, der das gesamte Zylindervolumen zwischen den nun parallel geschalteten Federn F 1 und F 2''' hin- und herschiebt.

Fig. 4 zeigt eine etwas praxisnähere Realisierungsmöglichkeit des in Fig. 3 mehr schematisch dargestellten Federungsprinzips. Die mechanische Feder 14 ist dabei in den Kolbenverdränger 9' integriert und stützt sich einerseits an dessen Zylinderdeckel 15 und andererseits an einem den kolbenstangenseitigen Arbeitsraum begrenzenden Trennkolben 16 ab. Dieser Arbeitsraum entspricht der Kammer K 2 der Darstellung nach Fig. 3. Unterhalb des Kolbens 11' befindet sich die Kammer K 1, die über die hohle Kolbenstange 13' mit der hydropneumatischen Feder F 1 verbunden ist, der zusätzliche Drosseln D 1 vorgeschaltet sind. Vor der Drossel D 1 ist noch der Anschluß 17 für eine Niveau-Regulierung angedeutet.

Zwischen dem Trennkolben 16 und dem Kolben 11' ist eine Zuganschlagfeder 18 vorgesehen, die auch progressiv ausgebildet sein kann.

Die Integration der Feder 14 in der beschriebenen Weise in den Verdränger 9' bietet im Vergleich zu der Prinzipdarstellung nach Fig. 3 den Vorteil, daß zusätzlich zur hydraulischen Beaufschlagung der Feder F 2''' diese auch direkt durch den Kolben 11' oder die Kolbenstange 13' betätigt werden kann, so daß sich weitere Variationsmöglichkeiten sowohl in der Wahl des Dämpfkraftals auch des Federkraftverlaufs ergeben. Die bei dem dargestellten Ausführungsbeispiel über den Anschlagring 19 betätigte Zuganschlagfeder 18 hat einen lastabhängigen Einstazpunkt, da sie sich an dem lastabhängig verschieblichen Trennkoolben 16 abstützt.

In Fig. 5 ist eine Kennlinienschar dargestellt, wie sie mit der Federung und Dämpfung nach Fig. 4 in Verbindung mit einer Niveau-Regulierung möglich ist.

Je schwerer das Fahrzeug beladen ist (obere Kurven der Kurvenschar), je weiter also die Feder 14 und damit auch der Trennkolben 16 einfedert, desto später setzt auch die Zuganschlagfeder 18 ein, wie aus Fig. 5 hervorgeht.

Man erkennt dabei ferner, daß die Federkennlinien um die Normallage alle die gleiche Steigung (Tangente T) haben. Durch den lastabhängigen Einsatzpunkt der Zuganschlagfeder 18 wird also die Progressivität der hydropneumatischen Feder F 1 wieder kompensiert.

Je nach Auslegung der Stahl-Feder 14, die den Verlauf des Zuganschlagfeder-Einsatzes und damit die Lage der strichpunktierten Geraden bestimmt, läßt sich zum Beispiel auch ein konstanter Eigenfrequenzverlauf über der Beladung erreichen, was sonst nur durch parallel geschaltete Stahlund Gasfedern zu erzielen ist.

Anstelle der in dem Ausführungsbeispiel nach Fig. 4 dargestellten, ggf. progressiven, Zuganschlagfeder 18 könnte auch eine sich auf dem Anschlagring 19 abstützende Feder aus polyurethan oder einem ähnlichen gummielastischen Material Verwendung finden.

Neben dem Federratenverlauf wird durch die Zuganschlagfeder 18 auch der Dämpfkraftverlauf lastabhängig beeinflußt. Sobald nämlich die Zuganschlagfeder 18 einsetzt, verändert sie die Geschwindigkeit $\dot{x}_{16}$ des Trennkolbens 16 und damit auch die Dämpfkraft der Drossel D3 des Kolbens 11', da diese von der Differenzgeschwindigkeit zwischen dem Kolben 11' und Trennkolben 16 abhängt ($V_{D3}=A_2$ ($\dot{x}-\dot{x}_{16}$)). Im Extremfall—Zuganschlagfeder 18 auf Block—fällt die Dämpfkraft der Drossel D3 auf Null ab, da der Koblen 11' und der Trennkolben 16 sich mit derselben Geschwindigkeit bewegen. Die ausreichende Grunddämpfung bewirkt dann die Drossel D1 (Fig. 4). Es ist auch möglich, die Zuganschlagfeder 18 ganz entfallen zu lassen, wobei der Anschlagring 19 (mit einem entsprechenden Knick in der Gesamt-Feder-Kennlinie) ab einem bestimmten Verdrängerweg x gegen den Trennkolben 16 anschlägt und diesen dann mitnimmt.

Der zusätzlich lastabhängige Dämpfeffekt (lastabhängige Änderung der Verdrängergeschwindigkeit $\dot{x}$) wird dem Effekt des Systems nach Fig. 3 (lastabahängige Erhöhung der Verdrängerfläche von $A_2$ auf $A_1$) überlagert, die Lastabhängigkeit der Dämpfkraft also noch verstärkt.

Deshalb ist auch eine lastabhängige Dämpfung denkbar, die nur auf diesem Effekt beruht; also ohne den anhand der Fig. 3 erläuterten Effekt, der unterschiedliche Federratenverläufe

$$\frac{dc_1}{dx} \quad \text{und} \quad \frac{dc_2'''}{dx}$$

über der Beladung erfordert. Die Gasfeder F 1 nach Fig. 3 könnte z. B. durch eine Stahlfeder F 1' ersetzt werden (was jedoch eine ungünstige degressive Gesamtfederrate ergäbe). Obwohl dann beide Federn F 1' und F 2''' den gleichen Federratvenverlauf haben, fällt auch dieses Ausführungsbeispiel unter den Grundgedanken der Erfindung. Durch die Zuganschlagfeder 18 wird nämlich die Wirkung der Feder F 2''' (beide wirken auf den Trennkolben 16) auf das Hydrauliksystem derart korrigiert, als ob F 2''' einen lastabhängigen (degressiven) Kennungsverlauf hätte und sehr hart im Leerzustand, jedoch normal im Belastungsfall wäre. Dabei gilt im Leerzustand des Fahrzeugs

$$\dot{V}_{D3}=0, \quad \text{bzw.} \quad c_{ges}=C_1'+C_2''',$$

während im Zustand größerer Belastung gilt:

$$\dot{V}_{D3}=A_2 \ (\dot{x}-\dot{x}_{16})$$

bzw

$$\frac{1}{c_{ges}} = \frac{1}{C_1'} + \frac{1}{C_2'''}$$

Wie sich zeigt, kann die unterschiedliche Volumenstromzuordnung zu den wenigstens zwei Federn des Gesamtfederungssystems demnach nicht nur durch unterschiedliche Federratenverläufe—beispielsweise eine Feder mit progressiver, die andere mit linearer Kennung—erreicht werden, sondern auch durch unterschiedliche Schaltung der Federn, beispielsweise durch Parallelschaltung im Leerzustand und Serienschaltung im Belastungszustand.

Wie man der merh schematischen Darstellung einer Weiterbildung der Erfindung in Fig. 6 entnehmen kann, kann jeweils einer Feder F 1 bzw. F 1' eines Rades oder Radpaares einer Fahrzeugachse auch diesen beiden gemeinsame zweite Feder F 2 zugeschaltet sein. Wie bei dem Ausführungsbeispiel nach Fig. 1 handelt es sich bei der gemeinsamen Feder F 2 um einen Kolbenspeicher, der im Gasraum durch eine Feder 5 verstärkt und damit linearisiert wurde. Die zusätzliche, lastabhängige Aufbaudämpfung kann durch eine am Eingang der gemeinsamen Feder F 2 vorgesehene Drossel D 2' vorgesehen werden. Es ist aber auch möglich, in jede einzelne von den Verdrängern 1 zu der gemeinsamen zweiten Feder F 2 führend Leitung 20 jeweils eine Drossel D 4 einzubauen. Im ersten Fall tritt die zusätzliche Aufbaudämpfung nur bei gleichseitigen Radbewegungen in Kraft, während bei gegenseitiger Radbewegung das Öl ungedrosselt von einer Seite zur anderen geschoben wird. Im zweiten Fall ist eine zusätzliche Aufbaudämpfung bei gleich- und gegenseitigen Radbewegungen vorhanden, was neben der zusätzlichen Hubdämpfung auch eine zusätzliche Wankdämpfung ermöglicht.

Anstelle des in Fig. 6 dargestellten Kolbenspeichers für die beiden Rädern gemeinsame zweite Feder F 2 kann diese gemeinsame Feder F 12 gemäß Fig. 6a auch ein Membranspeicher sein. Dabei kann die Membran 21 bei niedrigen Arbeitsdrücken auf der Zuleitungsöffnung 22 des Membranspeichers aufliegen. Die Feder F 12 tritt erst dann in Funktion, wenn ihr Fülldruck vom Systemdruck überschritten wird. Diese Ausführungsform hat daher der Nachteil, daß sich Feder- und Dämpfkraftverlauf unstetig ändern.

Nach Fig. 6 b kann die gemeinsame Feder F 12' auch eine Zylinder/Kolben-Einheit sein. Der Kolben 23 stützt sich dabei über zwei mechanische Feder 24 an den Böden der Einheit ab. Die beiderseits des Kolbens 23 gebildeten Strömungsmittelkammern sind in analoger Weise wie zum Ausführungsbeispiel nach Fig. 6 jeweils einem Verdränger 1 eines der beiden Räder einer Achse zugeordnet.

Die Variante nach Fig. 6 b ermöglicht keine zusätzliche Hubdämpfung, sondern nur eine zusätzliche Wankdämpfung in Verbindung mit einer gegenüber der Hubfederrate weicheren Wankfederrate, da der Kolben 23 nur bei gegenseitigen Radbewegungen entgegen der Kraft der Federn 24 aus seiner Mittellage bewegt wird.

**Patentansprüche**

1. Federungssystem für Fahrzeuge, it einem durch die Relativbewegungen zwischen Rad und Fahrzeugaufbau betätigbaren Verdränger, dessen Arbeitsraum unter Zwischenschaltung wenigstens einer Drossel mit mindestens zwei direkt und/oder durch ein Strömungsmittel beaufschlagbaren Federn in Verbindung steht, dadurch gekennzeichnet, daß die Federn (F 1, F 2; F 2'; F 2'''; F 1, F 1', F 2; F 12; F 12') unterschiedliche belastungsabhängige Federratenänderungen haben, wodurch jeweils abhängig vom statischen Strömungsmitteldruck ($p_{stat}$) eine unterschiedliche Aufteilung der zu den Federn verdrängten Volumenanteile erfolgt, und daß ferner zumindest eine lastabhängig wirksame Drossel (D 2; D 3 (Fig. 4 u. 5); D 4; D 2') der weniger progressivern Feder (F 2; F 2'; F 2'''; F 12') vorgeschaltet ist.

2. Federung nach Anspruch 1, dadurch gekennzeichnet, daß die Federn (F 1, F 2; F 2'; F 12; F 12') in Serie geschaltet sind.

3. Federung nach Anspruch 1 oder 2, dadurch gekennzeichnet, daß der Verdränger (1, 9, 9', 11) ein Kolben-Verdränger ist, in dessen Kolben (3, 11, 11') wenigstens eine Drossel (D 3) vorgesehen ist.

4. Federung nach einem der Ansprüche 1 bis 3, dadurch gekennzeichnet, daß beide Federn (F 1, F 2, F 2', F 12) hydropneumatische Federn sind.

5. Federung nach Anspruch 4, gekennzeichnet durch die Kombination eines Membranspeichers (Feder F 1) mit einem Kolbenspeicher (Feder F 2), wobei der Kolben (4) mit einer mechanischen Zusatz-Feder (5) verbunden ist.

6. Federung nach Anspruch 5, dadurch gekennzeichnet, daß die mechanische Zusatz-Feder (5) eine im Gasraum des Kolbenspeichers angeordnete Druckfeder ist.

7. Federung nach Anspruch 1, oder 2, dadurch gekennzeichnet, daß der Verdränger ein Plungerkolben (6) ist.

8. Federung nach Anspruch 4, dadurch gekennzeichnet, daß das Gasgewicht einer (F 2') der beiden hydropneumatischen Federn (F 1, F 2') veränderbar ist.

9. Federung nach Anspruch 8, dadurch gekennzeichnet, daß der Gasraum der im Gasgewicht veränderbaren Feder (F 2') an eine Niveau-Regulierung angeschlossen ist.

10. Federung nach Anspruch 9, dadurch gekennzeichnet, daß der gasseitig geregelten Feder (F 2') eine Drossel (D 2) mit einer höheren Dämpferrate zugeordnet ist als der anderen Feder (F 1).

11. Federung nach Anspruch 1, dadurch gekennzeichnet, daß die beiden Federn (F 1, F 2''') jeweils an eine Kammer (K 1 bzw. K 2) eines Zweikammer-Kolbenverdrängers (8, 9; 9') angeschlossen sind.

12. Federung nach Anspruch 11, dadurch gekennzeichnet, daß im Kolben (11, 11') des Kolbenverdrängers (8, 9) wenigstens eine Drossel (D 3) vorgeshen ist.

13. Federung nach Anspruch 11 oder 12, dadurch gekennzeichnet, daß eine Feder (F 1) eine hydropneumatische und die zweite Feder (F 2''') ein Kolbenspeicher mit einer rein mechanischen Feder (14) ist.

14. Federung nach Anspruch 13, dadurch gekennzeichnet, daß die hydropneumatische Feder (F 1) an die kolbenstangenfreie Seite des Kolbenverdrängers (9) angeschlossen ist.

15. Federung nach Anspruch 12 bis 14, dadurch gekennzeichnet, daß dem Kolbenspeicher (Feder F 2''') eine weitere Drossel (D 2) vorgeschaltet ist.

16. Federung nach Anspruch 13 oder 14, dadurch gekennzeichnet, daß die mechanische Feder (14) in den Kolbenverdränger (9') integriert ist und sich einerseits an dessen Zylinderdeckel (15) und andererseits an einem der Kolbenstangenseitgen Arbeitsraum (Kammer K 2) begrenzenden Trennkolben (16) abstützt.

17. Federung nach Anspruch 16, dadurch gekennzeichnet, daß zwischen dem Trennkolben (16) und dem Kolben (11') eine Zuganschlagfeder (18) vorgesehen ist.

18. Federung nach Anspruch 17, dadurch gekennzeichnet, daß zwischen dem Trennkolben (16) und dem Kolben (11') ein an der Kolbenstange befestigter Anschlagring (19) vorgesehen ist, der ab einem bestimmten Ausfederweg auf den Trennkolben (16) bzw. die Zuganschlagfeder (18) einwirkt.

19. Federung nach Anspruch 1, dadurch gekennzeichnet, daß jeweils einer Feder (F 1 bzw. F 1') eines Rades einer Fahrzeugachse eine diesen beiden gemeinsame zweite Feder (F 2, F 12, F 12') zugeschaltet ist (Fig. 6, 6a, 6b).

20. Federung nach Anspruch 19, gekennzeichnet durch eine am Eingang der gemeinsamen zweiten Feder (F 2) vorgesehen Drossel (D 2').

21. Federung nach Anspruch 19 oder 20, dadurch gekennzeichnet, daß jede einzelne von den Verdrängern (1) zu der gemeinsamen zweiten Feder (F 2) führende Leitung (20) eine Drossel (D 4) aufweist.

22. Federung nach Anspruch 19, dadurch gekennzeichnet, daß die gemeinsame Feder (F 2) ein Kolbenspeicher ist, dessen Kolben (4) gegen die Wirkung einer mechanischen Feder (5) verlagerbar ist.

23. Federung nach Anspruch 19, dadurch gekennzeichnet, daß die gemeinsame Feder (F 12') eine Zylinder/Kolben-Einheit mit einem über wenigstens eine mechanische Feder (24) abgestützten Kolben (23) ist, wobei jede Strömungsmittelkammer jeweils einem Verdränger (1) eines der beiden Räder zugeordnet ist.

**Revendications**

1. Système de suspension pour véhicules avec un dispositif de refoulement susceptible d'être actionné par les déplacements relatifs entre la roue et la carrosserie du véhicule, et dont la chambre de travail est en communication avec interposition d'au moins un étranglement avec au moins deux dispositifs élastiques susceptibles d'être activés directement et/ou par l'intermédiaire d'un fluide, système caractérisé en ce que les dispositifs élastiques (F1, F2; F2'; F2'''; F1, F1', F2; F12; F12') ont des variations de taux d'élasticité différentes en fonction de la charge, grâce à quoi en fonction de la pression statique du fluide ($p_{stat}$) une répartition respectivement différente des fractions de volumes refoulées vers les dispositifs élastiques s'effectue, tandis qu'en outre, au moins un étranglement intervenant en fonction de la pression (D2; D3 (figures 4 et 5); D4; D2') est branché en amont du dispositif élastique le moins progressif (F2; F2'; F2'''; F12').

2. Suspension selon la revendication 1, caractérisé en ce que les dispositifs élastiques (F1, F2; F2'; F12; F12') sont branchés en série.

3. Suspension selon la revendication 1 ou 2, caractérisée en ce que le dispositif de refoulement (1, 9, 9', 11) est un dispositif de refoulement à piston, dans le piston (3, 11, 11') duquel il est prévu au moins un étranglement (D3).

4. Suspension selon une des revendications 1 à 3, caractérisée en ce que les deux dispositifs élastiques (F1, F2, F', F12) sont des dispositifs élastiques hydropneumatiques.

5. Suspension selon la revendication 4, caractérisée par la combinaison d'un accumulateur à membrane (dispositif élastique F1) avec un accumulateur à piston (dispositif élastique F2), le piston (4) étant combiné avec un ressort mécanique supplémentaire (5).

6. Suspension selon la revendication 5, caractérisée en ce que le ressort mécanique supplémentaire (5) est un ressort de pression disposé dans la chambre à gaz de l'accumulateur à piston.

7. Suspension selon la revendication 1 ou 2, caractérisé en ce que le dispositif de refoulement est un piston plongeur (6).

8. Suspension selon la revendication 4, caractérisée en ce que la charge de gaz de l'un (F2') des deux dispositifs élastiques hydropneumatiques (F1, F2') peut être modifiée.

9. Suspension selon la revendication 8, caractérisée en ce que la chambre à gaz du dispositif élastique (F2') dont la charge de gaz peut être modifiée, est raccordée à une régulation de niveau.

10. Suspension selon la revendication 9, caractérisée en ce qu'au dispositif élastique (F2') réglé en ce qui concerne le gaz, est associé un étranglement (D2) ayant un taux d'amortissement plus élevée que celui associée à l'autre dispositif élastique (F1).

11. Suspension selon la revendication 1, caractérisée en ce que les deux dispositifs élastiques (F1, F2''') sont respectivement raccordés à une chambre (K1 ou bien K2) d'un dispositif de refoulement à pistons à deux chambres (8, 9; 9').

12. Suspension selon la revendication 11, caractérisée en ce qu'au moins un ètranglement (D3) est prévu dans le piston (11, 11') du dispositif de déplacement à piston (8, 9).

13. Suspension selon la revendication 11 ou 12, caractérisée en ce que l'un (F1) des dispositifs élastiques est un dispositif élastique hydropneumatique tandis que le second dispositif élastique (F2''') est un accumulateur à piston avec un ressort purement mécanique (14).

14. Suspension selon la revendication 13, caractérisée en ce que le dispositif élastique hydropneumatique (F1) est raccordé au côté exempt de tige de piston du dispositif de déplacement à piston (9).

15. Suspension selon l'une des revendications 12 à 14, caractérisée en ce qu'un autre étranglement (D2) est branché en amont de l'accumulateur à piston (dispositif élastique (F2''').

16. Suspension selon la revendication 13 ou 14, caractérisée en ce que le ressort mécanique (14) est intégré dans le dispositif de déplacement à piston (9') et prend appui, d'une part, contre le couvercle (15) du cylindre de ce dispositif de déplacement et, d'autre part, contre un piston de séparation (16) délimitant la chambre de travail du côté de la tige de piston (chambre K2).

17. Suspension selon la revendication 16, caractérisée en ce qu'il est prévu entre le piston de séparation (16) et le piston (11') un ressort de butée à la traction (18).

18. Suspension selon la revendication 17, caractérisée en ce qu'il est prévu entre le piston de séparation (16) et le piston (11') un anneau de butée (19) fixé sur la tige de piston, et qui, à partir d'un course déterminée hors du dispositif élastique, agit sur le piston de séparation (16) ou bien sur le ressort de butée à la traction (18).

19. Suspension selon la revendication 1, caractérisé en ce qu'un second dispositif élastique (F2, F12, F12') est branché en commun sur chacune des dispositifs élastiques (F1 ou bien F1') de chacune des roues d'un essieu de véhicule (figures 6, 6a, 6b).

20. Suspension selon la revendication 19, caractérisée en ce qu'un étranglement (D2') est prévu à l'entrée de ce second dispositif élastique commun (F2).

21. Suspension selon la revendication 19 ou 20, caractérisée en ce que chacune des canalisations individuelles (20) allant des dispositifs de déplacement (1) au second dispositif commun (F2) comporte un étranglement (D4).

22. Suspension selon la revendication 19, caractérisée en ce que le dispositif élastique commun (F2) est un accumulateur à piston dont le piston (4) est susceptible de se déplacer contre l'action d'un ressort mécanique (5).

23. Suspension selon la revendication 19, caractérisée en ce que le dispositif élastique commun (F12') est un ensemble cylindre/piston avec un piston (23) prenent appui sur au moins un ressort mécanique (24), chaque chambre à fluide étant respectivement associée à un dispositif de déplacement (1) de l'une des deux roues.

**Claims**

1. A suspension system for vehicles having a displacer actuatable by the relative movements between wheel and vehicle body, the working chamber of the displacer being in communication, with the interposition of at least one constriction, with at least two springs which are loadable directly and/or by a flow medium, characterised in that the springs (F1, F2; F2'; F2'''; F1, F1', F2; F12, F12') have different load-dependent spring rating characteristics, whereby, in each case, in dependence upon the static flow medium pressure ($p_{stat}$), a different distribution of the volume proportions displaced to the springs takes place, and further that at least one load-dependently effective constriction (D2; D3 (Figures 4 and 5); D4; D2') is placed before the less progressive spring (F2; F'''; F2'''; F12').

2. A suspension according to Claim 1, characterised in that the springs (F1, F2; F2'; F12; F12') are connected in series.

3. A suspension according to Claim 1 or 2, characterised in that the displacer (1, 9, 9', 11) is a piston displacer in the piston (3, 11, 11') of which at least one constriction (D3) is provided.

4. A suspension according to one of Claims 1 to 3, characterised in that both springs (F1, F2, F2', F12) are hydro-pneumatic springs.

5. A suspension according to Claim 4, characterised by the combination of a diaphragm storage means (spring F1) with a piston storage means (spring F2), the piston (4) being connected to a mechanical additional spring (5).

6. A suspension according to Claim 5, characterised in that the mechanical additional spring (5) is a compression spring arranged in the gas chamber of the piston storage means.

7. A suspension according to Claim 1 or 2, characterised in that the displacer is a plunger piston (6).

8. A suspension according to Claim 4, characterised in that the gas weight of one (F2') of the two hydro-pneumatic springs (F1, F2') is variable.

9. A suspension according to Claim 8, characterised in that the gas chamber of the spring (F2') of variable gas weight is connected to a level-regulating system.

10. A suspension according to Claim 9, characterised in that, to the spring (F2') regulated on the gas side, there is allocated a constriction (D2) with a higher damper rating than the other spring (F1).

11. A suspenion according to Claim 1, characterised in that the two springs (F1, F2''') are each connected to a chamber (K1 and K2) respectively of a two-chamber piston displacer (8, 9; 9').

12. A suspension according to Claim 11, characterised in that at least on constriction (D3) is provided in the piston (11, 11') of the piston displacer (8, 9).

13. A suspension according to Claim 11 or 12, characterised in that one spring (F1) is a hydro-pneumatic spring and the second spring (F2''') is a piston storage means with a purely mechanical spring (14).

14. A suspension according to Claim 13, characterised in that the hydro-pneumatic spring (F1) is attached to the piston-rod-free side of the piston displacer (9).

15. A suspension according to Claims 12 to 14, characterised in that a further constriction (D2) is placed before the piston storage means spring (F2''').

16. A suspension according to Claim 13 or 14, characterised in that the mechanical spring (14) is integrated into the piston displacer (9') and is supported on one side on its cylinder head (15) and on the other on a separator piston (16) bounding the working chamber (chamber K2) on the piston rod side.

17. A suspension according to Claim 16, characterised in that a traction stop spring (18) is provided between the separator piston (16) and the piston (11').

18. A suspension according to Claim 17, characterised in that a stop ring (19) secured to the piston rod is provided between the separator piston (16) and the piston (11'), which stop ring acts upon the separator piston (16) and/or the traction stop spring (18) as from a specific outward spring travel distance.

19. A suspension according to Claim 1, characterised in that to one spring (F1 or F1') in each case of one wheel of a vehicle axle there is connected a second spring (F2, F12, F12') common to these two (Figure 6, 6a, 6b).

20. A suspension according to Claim 19, characterised by a constriction (D2') provided at the entry of the common second spring (F2).

21. A suspension according to Claim 19 or 20, characterised in that each individual conduit (29) leading from the displacers (1) to the common second spring (F2) comprises a constriction (D4).

22. A suspension according to Claim 19, characterised in that the common spring (F2) is a piston storage means the piston (4) of which is displaceable against the action of a mechanical spring (5).

23. A suspension according to Claim 19, characterised in that the common spring (F12') is a cylinder/piston unit having a piston (23) supported through at least one mechanical spring (24), while each flow medium chamber is allocated to one displacer (1) in each case of one of the two wheels.

FIG.1

FIG.1a                                FIG.1b

$$\left(\frac{\Delta V_1}{\Delta V_2}\right)_{leer} > \left(\frac{\Delta V_1}{\Delta V_2}\right)_{bel.}$$

### FIG.2

### FIG.2a

### FIG.2b

$$\left(\frac{\Delta V_1}{\Delta V_2}\right)_{leer} > \left(\frac{\Delta V_1}{\Delta V_2}\right)_{bel.}$$

FIG.3

FIG.4

FIG.5

# FIG.6

# FIG.6a

# FIG.6b